(19) Europäisches Patentamt
European Patent Office
Office européen des brevets

(11) **EP 4 552 901 A1**

(12) **EUROPEAN PATENT APPLICATION**

(43) Date of publication:
**14.05.2025 Bulletin 2025/20**

(21) Application number: **24209959.6**

(22) Date of filing: **30.10.2024**

(51) International Patent Classification (IPC):
**B60L 15/02** (2006.01)    **B60L 58/27** (2019.01)
**H01M 10/615** (2014.01)

(52) Cooperative Patent Classification (CPC):
**B60L 15/02; B60L 58/27; H01M 10/615;**
B60L 2210/40; B60L 2240/423; B60L 2240/545;
B60L 2260/22; Y02T 10/72

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.11.2023 CN 202311484084**

(71) Applicant: **Huawei Digital Power Technologies Co., Ltd.**
**Shenzhen, Guangdong 518043 (CN)**

(72) Inventors:
• **CAO, Sen**
**518043 Shenzhen (CN)**
• **LI, Hongyong**
**518043 Shenzhen (CN)**
• **XU, Yankun**
**518043 Shenzhen (CN)**

(74) Representative: **Gill Jennings & Every LLP**
**The Broadgate Tower**
**20 Primrose Street**
**London EC2A 2ES (GB)**

(54) **MOTOR CONTROLLER, CONTROL METHOD FOR MOTOR CONTROLLER, POWERTRAIN**

(57)    This application provides a motor controller for pulse heating of a power battery. The motor controller includes an inverter circuit, the inverter circuit includes three switching transistor bridge arms, two ends of each switching transistor bridge arm are respectively configured to connect to positive and negative electrodes of the power battery through a direct current bus, and bridge arm midpoints of the three switching transistor bridge arms are separately configured to connect to a three-phase winding of a motor. The bridge arm midpoints of the three switching transistor bridge arms are configured to output a three-phase current, the three-phase current is used to generate a pulse alternating current on the direct current bus, and the pulse alternating current is used to heat the power battery. A current of each phase of the three-phase current is a unipolar triangular wave, and a sum of the three-phase current is zero. The motor controller provided in this application implements closed-loop control on a direct axis current and a quadrature axis current of a drive motor, so that control precision is high, system robustness is good, and efficiency of heating the power battery is high.

Powertrain 14

Motor controller 12

Power battery 13

Drive motor 11

Wheel 15

Electric vehicle 10

FIG. 1

EP 4 552 901 A1

**Description**

**TECHNICAL FIELD**

This application relates to the field of new energy vehicles, and in particular, to a motor controller, a control method for a motor controller, a powertrain.

**BACKGROUND**

Currently, manners of heating a power battery mainly include positive temperature coefficient (PTC) resistor heating, electric drive active heating, high-frequency pulse alternating current heating, and the like. Positive temperature coefficient resistor heating requires an additional electronic component, resulting in component redundancy, a complex structure, and the like. Electric drive active heating has an excessively long heat transfer path, low heating efficiency, and the like. In high-frequency pulse heating, a high-frequency pulse alternating current is used to generate Joule heat directly on an internal resistor of the power battery, to heat the power battery quickly. In the high-frequency pulse heating manner, efficiency of heating the power battery is high. However, in a current pulse heating manner, a motor outputs unexpected torque, has large noise and vibration, and the like in a heating process. In addition, in a current pulse heating control process, control accuracy is low, robustness of a control system is poor, and the like.

**SUMMARY**

This application provides a motor controller, a control method for a motor controller, a powertrain, and an electric vehicle, to perform closed-loop control on a direct axis current and a quadrature axis current of a motor in a pulse heating process, so as to improve system control precision in the pulse heating process and reduce unexpected torque output by the motor in the pulse heating process.

According to a first aspect, this application provides a motor controller for pulse heating of a power battery. The motor controller includes an inverter circuit, the inverter circuit includes three switching transistor bridge arms, two ends of each switching transistor bridge arm are respectively configured to connect to positive and negative electrodes of the power battery through a direct current bus, and bridge arm midpoints of the three switching transistor bridge arms are separately configured to connect to a three-phase winding of a motor. The bridge arm midpoints of the three switching transistor bridge arms are configured to output a three-phase current, the three-phase current is used to generate a pulse alternating current on the direct current bus, and the pulse alternating current is used to heat the power battery. A current of each phase of the three-phase current is a unipolar triangular wave, and a sum of the three-phase current is zero.

The motor controller provided in this application may generate the pulse alternating current on the direct current bus to heat the power battery. The three-phase current output by the motor controller provided in this application in a process of generating the pulse alternating current is a unipolar triangular wave. In this way, energy stored in a winding of a motor in a pulse heating process can be increased, and an effective value of the pulse alternating current is increased to improve efficiency of heating the power battery.

In an implementation of the first aspect, in response to a battery heating level instruction, the motor controller is configured to output a first three-phase current based on an indication of the battery heating level instruction, where the first three-phase current is used to generate a first pulse alternating current. In response to another battery heating level instruction, the motor controller is configured to output a second three-phase current based on an indication of the another battery heating level instruction, where the second three-phase current is used to generate a second pulse alternating current. At least one of a direct current bias value of the three-phase current, a frequency value of the pulse alternating current, and an amplitude of the pulse alternating current that are indicated by the battery heating level instruction is different from that indicated by the another battery heating level instruction. The first pulse alternating current and the second pulse alternating current have different heating power.

In an implementation of the first aspect, the motor controller is configured to control a quadrature axis current component of the three-phase current to be zero, or configured to control a value of torque generated by the motor driven by the three-phase current to be less than a preset torque value.

In a pulse heating process of the power battery, a quadrature axis current component of the three-phase current output by the inverter circuit of the motor controller provided in this application is zero, so that the motor does not output torque in the pulse heating process, to avoid vibration and noise caused by the unexpected torque output by the motor. In addition, in the pulse heating process, due to various reasons such as control precision, it cannot be ensured that the torque output by the motor is completely zero. The torque output by the motor is less than the preset torque value, for example, the preset torque value is 0.5 N·m.

In an implementation of the first aspect, the motor controller is configured to control a frequency of the three-phase current output by the inverter circuit to be equal to a frequency of the pulse alternating current.

In an implementation of the first aspect, the motor controller is configured to control a waveform of the pulse alternating current generated by the three-phase current to be an irregular sine wave.

In an implementation of the first aspect, in response to a case in which a temperature of the power battery is lower than a first preset temperature value, the motor controller is configured to control the inverter circuit to output a first three-phase current, where the first three-phase current is used to generate a first pulse alternating current. In response to a case in which the temperature of the power battery is lower than a second preset temperature value, the motor controller is configured to control the inverter circuit to output a second three-phase current, where the second three-phase current is used to generate a second pulse alternating current. The second preset temperature is lower than the first preset temperature, and a frequency of the second pulse alternating current is higher than a frequency of the first pulse alternating current.

When the temperature of the power battery is low, pulse heating needs to be performed on the power battery. The motor controller provided in this application may choose to output three-phase currents of different frequencies based on different temperatures of the power battery, to generate pulse alternating currents with different frequencies, and finally heat the power battery at different heating power. A higher frequency of the pulse alternating current indicates higher heating power for the power battery. Therefore, when the power battery is lower, higher heating power may be used to heat the power battery, to improve efficiency of heating the power battery.

In an implementation of the first aspect, the control circuit includes a storage apparatus. The storage apparatus is configured to store a plurality of preset parameter groups. The plurality of preset parameter groups respectively correspond to a plurality of battery heating level instructions. Each preset parameter group includes a frequency value of a direct axis voltage, an amplitude of the direct axis voltage, and a direct axis current given value. Any two preset signal groups are different in at least one of the frequency value of the direct axis voltage, the amplitude of the direct axis voltage, and the direct axis current given value, and different battery heating level instructions indicate different battery heating power.

The motor controller injects a direct axis voltage signal into a direct axis of the motor, where the direct axis voltage is a square wave voltage. A preset parameter corresponding to the direct axis voltage signal includes a frequency value of a direct axis voltage, an amplitude of the direct axis voltage, and a direct axis current given value, frequency values of different direct axis voltages, amplitudes of different direct axis voltages, or different direct axis current given values correspond to different heating power.

In an implementation of the first aspect, the motor controller includes a condition processing module. The condition processing module is configured to output a direct axis voltage frequency value signal and a direct axis voltage amplitude signal based on the indication of the battery heating level instruction. The direct axis voltage frequency value signal indicates the frequency value of the direct axis voltage, and the direct axis voltage amplitude signal indicates the amplitude of the direct axis voltage.

In an implementation of the first aspect, the frequency of the pulse alternating current varies with the frequency value of the direct axis voltage.

In an implementation of the first aspect, the control circuit includes a direct axis current control module and a quadrature axis current control module. The direct axis current control module is configured to: receive a direct axis current given value signal and a direct axis current feedback value signal, and output a direct axis voltage bias signal. The direct axis voltage bias signal indicates a bias value of the direct axis voltage, the direct axis current given value signal indicates the direct axis current given value, and the direct axis current given value is a direct current bias. The quadrature axis current control module is configured to: receive a quadrature axis current given value signal and a quadrature axis current feedback value signal, and output a quadrature axis voltage signal. A quadrature axis current given value indicated by the quadrature axis current given value signal is zero, the quadrature axis current feedback value signal indicates a quadrature axis current component of the three-phase current, and the quadrature axis voltage signal is used to regulate the quadrature axis current component of the three-phase current. The quadrature axis current control module determines a value of the quadrature axis voltage by comparing the quadrature axis current given value with the quadrature axis current feedback value that is of the three-phase current. This implements closed-loop control on the quadrature axis voltage, and improves control precision and robustness of the quadrature axis voltage.

In an implementation of the first aspect, the direct axis current given value indicated by the direct axis current given value signal is a negative direct current bias, and the quadrature axis current given value indicated by the quadrature axis current given value signal is zero.

The motor controller in embodiments of this application sets the quadrature axis current given value indicated by the quadrature axis current given value to be zero, so that the quadrature axis current component of the three-phase current is correspondingly zero. In this way, the motor does not output torque in the pulse heating process.

In an implementation of the first aspect, the control circuit includes a low-pass filter. The low-pass filter is configured to filter a high-frequency component of the direct axis current component feedback value of the three-phase current, and the high-frequency component varies with a square wave voltage given value.

In an implementation of the first aspect, a square wave signal generator is configured to output a direct axis voltage given value signal based on the frequency value of the direct axis voltage and the amplitude of the direct axis voltage. The direct axis voltage given signal indicates the frequency value of the direct axis voltage and the amplitude of the direct axis voltage.

In an implementation of the first aspect, the control circuit includes a drive module. The drive module is configured to output a drive signal based on the direct axis voltage signal and the quadrature axis voltage signal, the direct axis voltage signal includes the direct axis voltage given signal and the direct axis voltage bias signal, and the drive signal is used to control the inverter circuit to output the three-phase current.

According to a second aspect, this application provides a control method for a motor controller. The motor controller includes an inverter circuit and a bus capacitor, the inverter circuit includes three switching transistor bridge arms, two ends of each switching transistor bridge arm are respectively configured to connect to two ends of the bus capacitor, the two ends of the bus capacitor are respectively configured to connect to positive and negative electrodes of a power battery through a direct current bus, and bridge arm midpoints of the three switching transistor bridge arms are separately configured to connect to a three-phase winding of a motor. The control method includes the following steps:

in response to a battery heating level instruction, controlling the bridge arm midpoints of the three switching transistor bridge arms to output a first three-phase current, where torque generated by the motor driven by the first three-phase current is less than a preset torque value, and the three-phase current is used to generate a first pulse alternating current on the direct current bus; and

in response to another battery heating level instruction, controlling the bridge arm midpoints of the three switching transistor bridge arms to output a second three-phase current, where torque generated by the motor driven by the second three-phase current is less than the preset torque value, and the second three-phase current is used to generate a second pulse alternating current on the direct current bus.

The first pulse alternating current and the second pulse alternating current each have a direct current bias, and at least one of a frequency, an amplitude, or a direct current bias value of the first pulse alternating current is different from that of the second pulse alternating current.

According to a third aspect, this application provides a powertrain. The powertrain includes a motor and a motor controller, the motor controller includes a direct current bus and an inverter circuit, the inverter circuit includes three switching transistor bridge arms, two ends of each switching transistor bridge arm are respectively configured to connect to positive and negative electrodes of a power battery through the direct current bus, and bridge arm midpoints of the three switching transistor bridge arms are separately configured to connect to a three-phase winding of the motor. The bridge arm midpoints of the three switching transistor bridge arms are configured to output a three-phase current, the three-phase current is used to generate a pulse alternating current on the direct current bus, and the pulse alternating current is used to heat the power battery. A current of each phase of the three-phase current is a unipolar triangular wave, and a sum of the three-phase current is zero.

Beneficial effect of the powertrain provided in the third aspect of this application is described in beneficial effect of the motor controller provided in the first aspect of this application or the control method for a motor controller provided in the second aspect of this application. Details are not described herein again.

According to a fourth aspect, this application provides an electric vehicle. The electric vehicle includes a power battery, wheels, and the powertrain according to the third aspect of this application. A motor controller of the powertrain is configured to: receive power supplied by the power battery, drive a three-phase motor to drive the wheels or output a three-phase current for heating, to generate a pulse alternating current on a direct current bus to heat the power battery.

Beneficial effect of the electric vehicle provided in the fourth aspect of this application is described in beneficial effect of the motor controller provided in the first aspect of this application or beneficial effect of the powertrain provided in the third aspect of this application. Details are not described herein again.

**BRIEF DESCRIPTION OF DRAWINGS**

FIG. 1 is a diagram of an electric vehicle according to an embodiment of this application;
FIG. 2 is a diagram of a powertrain according to an embodiment of this application;
FIG. 3 is a diagram of a motor controller according to an embodiment of this application;
FIG. 4 is a diagram of running of a motor controller according to an embodiment of this application;
FIG. 5 is another diagram of running of a motor controller according to an embodiment of this application;
FIG. 6 is another diagram of running of a motor controller according to an embodiment of this application;
FIG. 7 is another diagram of running of a motor controller according to an embodiment of this application;
FIG. 8 is another diagram of running of a motor controller according to an embodiment of this application;

FIG. 9 is a diagram of a waveform of a unipolar triangular wave;

FIG. 10 is another diagram of running of a motor controller according to an embodiment of this application;

FIG. 11 is another diagram of a powertrain according to an embodiment of this application; and

FIG. 12 is another diagram of a powertrain according to an embodiment of this application.

## DESCRIPTION OF EMBODIMENTS

The following describes technical solutions in specific implementations of this application with reference to accompanying drawings in the implementations. Before specific content of the technical solutions is described, terms used in this application are first briefly described.

In this specification and claims, the words "first", "second", "third", and the like or similar words such as a module A, a module B, and a module C are merely used to distinguish between similar objects, and do not represent a specific order of the objects. It may be understood that specific orders or sequences may be exchanged if permitted, so that embodiments of this application described herein can be implemented in an order other than an order illustrated or described herein.

The term "include" used in the specification and claims should not be construed as being limited to the content listed below; and the term does not exclude other elements or steps. Accordingly, it should be interpreted as specifying the presence of the feature, whole, step or component mentioned, but does not preclude the presence or addition of one or more other features, wholes, steps or components and groups thereof. Therefore, the expression "device including apparatuses A and B" should not be limited to device consisting of only components A and B.

"One embodiment" or "an embodiment" mentioned in this specification means that a specific feature, structure, or characteristic described in combination with this embodiment is included in at least one embodiment of this application. Therefore, the term "in one embodiment" or "in an embodiment" appearing throughout this specification does not necessarily refer to a same embodiment, but may refer to a same embodiment. Further, in one or more embodiments, the particular features, structures, or characteristics can be combined in any suitable manner, as will be apparent to those of ordinary skill in the art from the present disclosure.

Unless otherwise defined, all technical and scientific terms used in this specification have same meanings as those usually understood by a person skilled in the art of this application. In case of any inconsistency, the meaning described in this specification or the meaning obtained based on the content recorded in this specification shall be used. In addition, the terms used in this specification are merely for the purpose of describing embodiments of this application, but are not intended to limit this application.

Currently, a motor of an electric vehicle is usually an alternating current motor, and a power battery is a direct current source. Therefore, a direct current output by the power battery is converted into a three-phase alternating current of the motor through an inverter circuit. Coordinate axes of the three-phase alternating current are separately a U-axis, a V-axis, and a W-axis. Three phases of the alternating current may also be separately referred to as a U phase, a V phase, and a W phase. To simplify analysis of the motor, a stationary three-phase coordinate is usually transformed into a rotating d-q coordinate. Such transformation is Park transformation (park transformation). In a d-q coordinate system, three coordinate axes are separately referred to as a direct axis, a quadrature axis, and a zero axis.

The direct axis (direct axis) is also referred to as a D axis or a d-axis, and is a direct current coordinate axis obtained from a stationary U/V/W three-phase coordinate axis through Park transformation.

The quadrature axis (quadrature axis) is also referred to as a Q axis or a q-axis, and is a time-varying alternating current coordinate axis obtained from the stationary U/V/W three-phase coordinate axis through Park transformation.

The zero axis is also referred to as a 0 axis or a 0-axis, and is a coordinate axis perpendicular to a d-q plane on which the direct axis and the quadrature axis are located.

Specifically, a formula of the Park transformation may be as follows:

$$\begin{bmatrix} I\_d \\ I\_q \\ I\_0 \end{bmatrix} = \frac{2}{3} \begin{bmatrix} \cos(\theta) & \cos(\theta - 2\pi/3) & \cos(\theta + 2\pi/3) \\ -\sin(\theta) & -\sin(\theta - 2\pi/3) & -\sin(\theta + 2\pi/3) \\ 1/2 & 1/2 & 1/2 \end{bmatrix} \begin{bmatrix} I\_u \\ I\_v \\ I\_w \end{bmatrix}$$

Herein, θ is an included angle between the d-axis and the U-axis. I_d is referred to as a direct axis current, and is mainly used to adjust a magnetic field. I_q is referred to as a quadrature axis current, and is mainly used to adjust torque. I_0 is referred to as a zero-sequence current. I_u, I_v, and I_w are respectively currents on the U-axis, the V-axis, and the W-axis, that is, a three-phase current.

The foregoing matrix is an expression for transforming the three-phase current into I_d, I_q, and I_0. An expression for transforming I_d, I_q, and I_0 into the three-phase current may be obtained through inverse transformation of the matrix transformation. Details are not described herein.

Because the three-phase current is a current corresponding to a real winding of the motor, when outputting a current to the direct axis of the motor, a motor controller needs to transform I_d into a three-phase current I_u, I_v, and I_w through inverse transformation of Park transformation, and input I_u, I_v, and I_w into the winding of the motor; or when outputting a current to the zero axis of the motor, a motor controller needs to transform I_0 into a three-phase current I_u, I_v, and I_w through inverse transformation of Park transformation, and input I_u, I_v, and I_w into the winding of the motor.

A quadrature axis voltage/current is used to control torque output by a drive motor 11, and a direct axis voltage/current is used to control a direction and a magnitude of a magnetic field generated by the drive motor 11.

The electric vehicle includes the drive motor, the motor controller, and the power battery. The motor controller receives electric energy of the power battery and supplies power to the drive motor. The drive motor is configured to drive wheels of the electric vehicle to rotate, so that the electric vehicle travels.

A temperature has a great impact on the power battery. A lithium plating phenomenon may occur when the power battery is charged and discharged at a low temperature. This may cause a power battery capacity to decrease and even cause a power battery safety risk. Therefore, the electric vehicle is allowed to travel only after the power battery is first heated to a specific temperature.

Currently, three manners for heating the power battery are mainly used.

A manner of heating the power battery is heating the power battery by using an external heating system. For example, a power battery thermal loop is disposed outside the power battery, and the power battery thermal loop has a heat-carrying fluid that carries heat. A positive temperature coefficient (PTC) resistor heats the hot-carrying fluid in the power battery thermal loop. The hot-carrying fluid in the power battery thermal loop conducts heat to the power battery to heat the power battery. In the foregoing manner, the hot-carrying fluid in the power battery thermal loop needs to be first heated, and then the power battery is heated by using the hot-carrying fluid in the power battery thermal loop. Therefore, a heat transfer path is long, and heating efficiency is low.

A manner of heating the power battery is performing electric drive active heating. In the electric drive active heating manner, an excitation current of the drive motor is used to generate heat on the motor to heat the power battery. The motor controller outputs the three-phase alternating current to the drive motor. The three-phase alternating current causes the torque of the drive motor to be zero. The excitation current generates heat on the winding of the drive motor. The heat generated on the drive motor is conducted to the power battery via a heat conduction apparatus between the drive motor and the power battery for heating. In the foregoing manner, the heat of the drive motor needs to be conducted to the power battery via the heat conduction apparatus. Therefore, the foregoing heating manner has disadvantages of a long heat transfer path, and a low heating rate and low efficiency of heating the power battery.

A manner of heating the power battery is performing high-frequency pulse heating. In the high-frequency pulse heating manner, a high-frequency pulse alternating current generated by the motor controller is used to heat the power battery. A motor controller bridge arm circuit generates the high-frequency pulse alternating current. The high-frequency pulse alternating current generates heat on internal resistance of the power battery when passing through the power battery, to heat the power battery. The high-frequency heating manner has an advantage of a high heating rate and is widely focused. However, the current high-frequency pulse heating manner has poor robustness of a control system, low control precision, unexpected torque, and the like.

Based on this, embodiments of this application provide a motor controller, a powertrain, and an electric vehicle. According to the motor controller provided in embodiments of this application, closed-loop control on a d-axis current and a q-axis current of a motor is set, to improve robustness of a high-frequency pulse heating system. The following specifically describes the motor controller, the powertrain, and the electric vehicle with reference to specific embodiments.

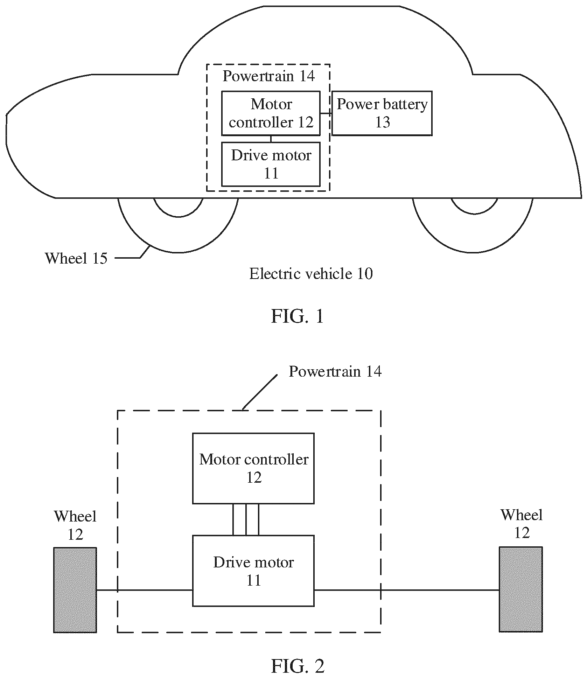

FIG. 1 is a diagram of a vehicle 10 according to an embodiment of this application. Refer to FIG. 1. The electric vehicle 10 includes a powertrain 14, a power battery 13, and wheels 15. The powertrain 14 is configured to receive power supplied by the power battery 13, to drive the wheels 15, or is configured to heat the power battery 13.

FIG. 2 is a diagram of the powertrain 14 according to an embodiment of this application. The powertrain 14 includes a drive motor 11 and a motor controller 12. The motor controller 12 receives a direct current of the power battery 13, converts the direct current into a three-phase alternating current, and then supplies power to the drive motor 11. The drive motor 11 is in transmission connection with the wheel 12 via a reducer or a transmission. In a running process of the electric vehicle 10, torque of the drive motor 11 is transferred to the wheels 15 to provide power for the electric vehicle 10. The drive motor 11 may be a permanent magnet synchronous motor, an asynchronous motor, or an electric excitation motor.

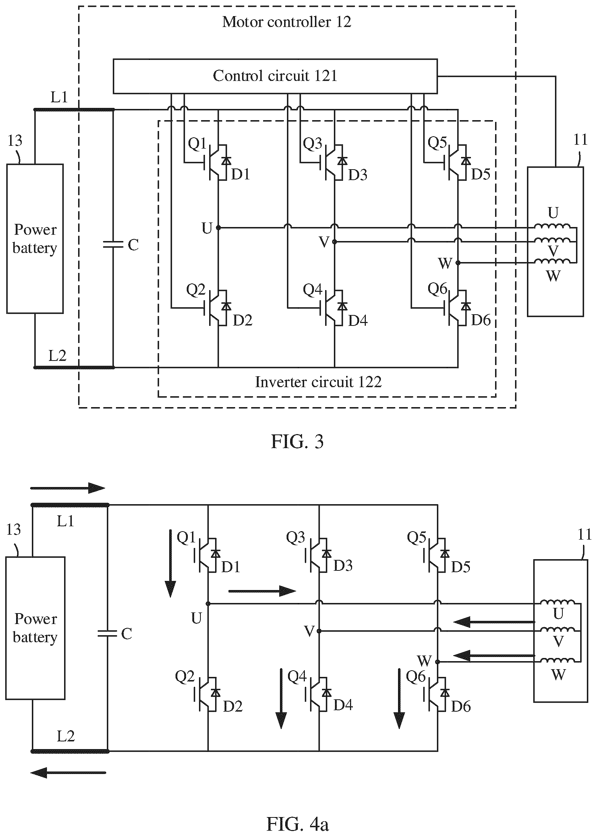

FIG. 3 is a diagram of the motor controller 12 according to an embodiment of this application. As shown in FIG. 3, the motor controller 12 includes a control circuit 121, an inverter circuit 122, and a bus capacitor C. One end of the bus capacitor C is configured to connect to a positive electrode of the power battery 13, and the other end of the bus capacitor C is configured to connect to a negative electrode of the power battery 13. The inverter circuit 122 includes three switching transistor bridge arms, two ends of each switching transistor bridge arm are respectively connected to two ends of the bus capacitor C, and a bridge arm midpoint of each switching transistor bridge arm is configured to connect to a phase winding of the drive motor 11. A rotor position signal output end of the drive motor 11 is connected to a signal collection end of the control circuit 121. Two ends of the inverter circuit 122 are respectively connected to the positive electrode and the negative electrode of the power battery 13. Specifically, one end of the inverter circuit 122 is configured to connect to the positive electrode of the power battery through a direct current bus L1, and the other end of the inverter circuit 122 is configured to connect to the negative electrode of the power battery through a direct current bus L2. The following describes, with reference to a specific embodiment, in detail a specific process in which the motor controller 12 performs high-frequency pulse heating.

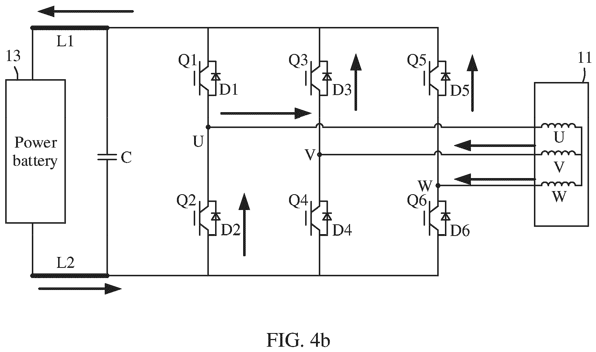

In a high-frequency pulse heating process of the power battery 13, the motor controller 12 outputs a three-phase current to the drive motor 11, and the three-phase current generates a pulse alternating current on the direct current bus. FIG. 4a and FIG. 4b are diagrams of pulse heating of the power battery 13.

In a first phase of pulse heating, the inverter circuit 122 is configured to: receive discharge of the power battery, and charge a winding of the motor 11. Specifically, in an example, as shown in FIG. 4a, a switching transistor Q1, a switching transistor Q4, and a switching transistor Q6 of the inverter circuit 122 are turned on, and other switching transistors are turned off. The power battery 13, the inverter circuit 122, and the drive motor 11 form a battery discharge loop.

In a second phase of pulse heating, the inverter circuit 122 is configured to: receive discharge of the winding of the motor 11, and charge the power battery. Specifically, in an example, as shown in FIG. 4b, the winding of the drive motor 11 charges the power battery via a freewheeling diode D2, a freewheeling diode D3, and a freewheeling diode D5, and the power battery 13, the inverter circuit 122, and the drive motor 11 form a battery charging loop.

The foregoing first phase and second phase are performed repeatedly, so that the pulse alternating current is generated on the direct current bus L1 and the direct current bus L2. In this process, the power battery 13 is charged and discharged repeatedly, and the pulse alternating current generates heat on internal resistance of the power battery 13, to heat the power battery from the inside of the power battery 13.

In the pulse heating process, the inverter circuit 122 outputs the three-phase current to the drive motor, and the three-phase current generates the pulse alternating current on the direct current bus L1 and the direct current bus L2 to heat the power battery. To avoid the drive motor 11 generating torque in the pulse heating process, the control circuit 121 in embodiments of this application controls an alternating current component of the three-phase current output by the inverter circuit 122 to be zero. A direct axis voltage injected by the motor controller 12 into the motor may be a sine wave voltage. However, when the direct axis voltage of the drive motor 11 is a sine wave voltage, a ripple current of a finally generated high-frequency pulse alternating current is large, so that efficiency of heating the power battery 13 is low. In embodiments of this application, the direct axis voltage input by the motor controller 12 to the drive motor is a square wave voltage Ud. Because the direct axis voltage of the drive motor 11 is the square wave voltage, ripples of a bus current of the bus capacitor C can be effectively reduced, thereby improving efficiency of heating the power battery 13.

In addition, the direct axis voltage output by the motor controller 12 to the drive motor 11 in embodiments of this application is a square wave voltage with a direct current bias, so that the direct axis current component of the three-phase current output by the inverter circuit 122 has a direct-current bias. Compared with a direct axis current component with no direct current bias, the direct axis current component with the direct current bias can reduce fluctuation of alternating current pulse electricity on the direct current bus, thereby improving system reliability. In other words, a direct axis voltage given value Ud of the direct axis voltage output by the motor controller 12 to the drive motor 11 in embodiments of this application includes two parts: a direct axis voltage given value Ud1 and a direct axis voltage bias value Ud2, where Ud1 is used to determine an amplitude and a frequency of the square wave voltage corresponding to the direct axis voltage, and Ud2 is used to determine a direct current bias value of the square wave voltage corresponding to the direct axis voltage.

The following describes in detail a specific running process of the motor controller 12 with reference to a specific embodiment.

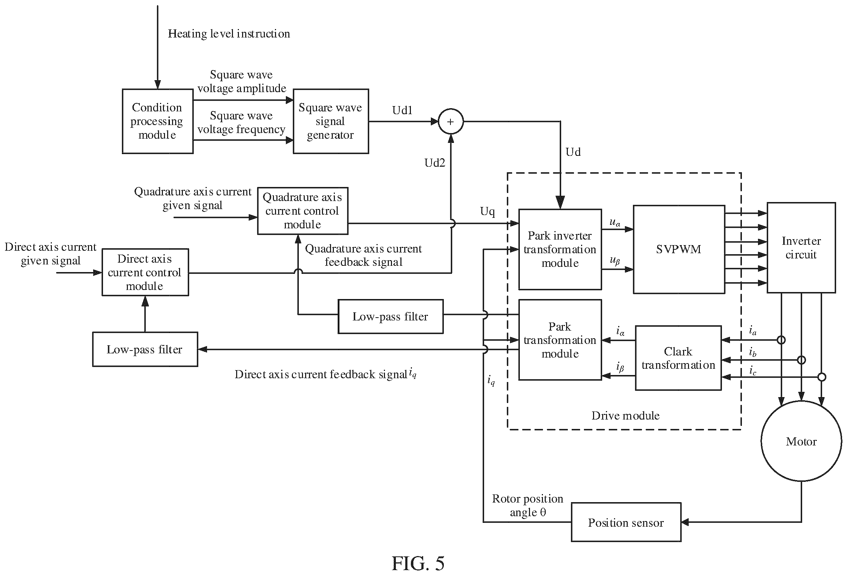

As shown in FIG. 5, the control circuit 121 of the motor controller 12 includes a storage apparatus 1211, a condition processing module 1212, a square wave signal generator 1213, a quadrature axis current control module 1214, a direct axis current control module 1215, and a drive module 1216.

The storage apparatus 1211 is configured to store a plurality of preset parameter groups. The plurality of preset parameter groups respectively correspond to a plurality of battery heating level instructions. Each preset parameter group includes a frequency value of a direct axis voltage, an amplitude of the direct axis voltage, and a direct axis current given value. Any two preset signal groups are different in at least one of the frequency value of the direct axis voltage, the amplitude of the direct axis voltage, and the direct axis current given value, and different battery heating level instructions indicate different battery heating power.

The direct axis voltage is the direct axis voltage of the motor 11, or the direct axis voltage component of the three-phase current output by the motor controller 12. The direct axis current given value is a given value of a direct axis current, and the direct axis current given value indicates a bias value of the three-phase current. For example, the direct axis current given value may be 1 A or 5 A.

The battery heating level instruction indicates power for heating the power battery by the motor controller 12, and the battery heating level instruction may be from a battery management system. Specifically, a temperature sensor is disposed on the power battery 13. Before the electric vehicle 10 is started, the battery management system monitors a temperature of the power battery 13 via the temperature sensor. If the temperature of the power battery is low, it is determined that the power battery 13 needs to be heated. Further, the battery management system determines required heating power for the power battery based on a specific temperature of the battery, and then outputs different battery heating level instructions to the motor controller.

For example, if the temperature of the battery is -5 degrees Celsius, the battery management system outputs a first battery heating level instruction to the motor controller; or if the temperature of the power battery is - 10 degrees Celsius, the battery management system outputs a second battery heating level instruction to the motor controller. Heating power indicated by the first battery heating level instruction is less than heating power indicated by the second battery heating level instruction.

In embodiments of this application, the heating power for the power battery is related to the frequency value of the direct axis voltage, the amplitude of the direct axis voltage, and the direct axis current given value. In other words, when the frequency value of the direct axis voltage, the amplitude of the direct axis voltage, or the direct axis current given value changes, the corresponding pulse heating power for the power battery also changes accordingly. In this way, the plurality of preset parameter groups stored in the storage apparatus correspond to different pulse heating power for the power battery. When the motor controller receives different heating level instructions, different heating level instructions correspond to different preset parameter groups.

The condition processing module 1212 is configured to: receive a battery heating level instruction, and output a square wave voltage amplitude signal and a square wave voltage frequency signal to the square wave signal generator based on the heating level instruction. The square wave signal generator 1213 sends a square wave voltage given signal Ud1 to the drive module based on the received square wave voltage amplitude signal and square wave voltage frequency signal.

In an embodiment, the condition processing module 1212 may also output different direct axis voltage amplitude signals and different direct axis voltage frequency signals to the square wave signal generator 1213 based on different temperatures of the power battery. For example, the condition processing module outputs a first direct axis voltage frequency signal in response to a case in which the temperature of the power battery is lower than a first preset temperature value. Correspondingly, the inverter circuit outputs a first three-phase current, and the first three-phase current generates a first pulse alternating current on the direct current bus. Both a frequency of the first three-phase current and a frequency of the first pulse alternating current are frequencies indicated by the first direct axis voltage frequency signal. The condition processing module 1212 outputs a second direct axis voltage frequency signal in response to a case in which the temperature of the power battery is lower than a second preset temperature value. Correspondingly, the inverter circuit outputs a second three-phase current, and the second three-phase current generates a second pulse alternating current on the direct current bus. Both a frequency of the second three-phase current and a frequency of the second pulse alternating current are frequencies indicated by the second direct axis voltage frequency signal. When a second preset temperature is lower than a first preset temperature, heating power of the second pulse alternating current is higher than heating power of the first pulse alternating current, so that when the temperature of the power battery is lower than the second preset temperature, the motor controller 12 heats the power battery 13 with higher heating power.

In embodiments of this application, the direct axis current control module 1215 is configured to: receive a direct axis current given value signal and a direct axis current feedback value signal, and output a direct axis voltage bias signal Ud2. The direct axis voltage bias signal Ud2 is used to enable the direct axis voltage to generate the direct current bias. The direct axis current given value signal indicates the direct axis current given value. The direct axis current feedback value signal is obtained by collecting a three-phase current output by the motor controller 12 and calculating the direct axis current component in the three-phase current actually output by the motor controller 12.

To implement closed-loop control on the direct axis current bias value, the motor controller provided in embodiments of this application includes a low-pass filter 211, the low-pass filter is configured to filter out a high-frequency component of the direct axis current collected from the drive motor 11, to obtain the direct current bias value in the direct axis current of the drive motor 11. A high-frequency component of a direct axis current signal collected from the drive motor 11 is filtered out by the low-pass filter, to obtain the direct axis current feedback value signal, that is, the direct axis current feedback value signal indicates a low-frequency component of the direct axis current component in the three-phase current actually output by the motor controller 12. The direct axis current control module 1215 obtains the direct axis voltage bias value signal Ud2 by comparing the direct axis current feedback signal with the direct axis current given signal, where the direct axis voltage bias value signal Ud2 indicates a bias value of the direct axis voltage.

The direct axis voltage given signal Ud1 and a direct axis voltage bias value signal Ud3 are superimposed, to form a direct axis voltage signal, and the direct axis voltage signal indicates a to-be-output direct axis voltage.

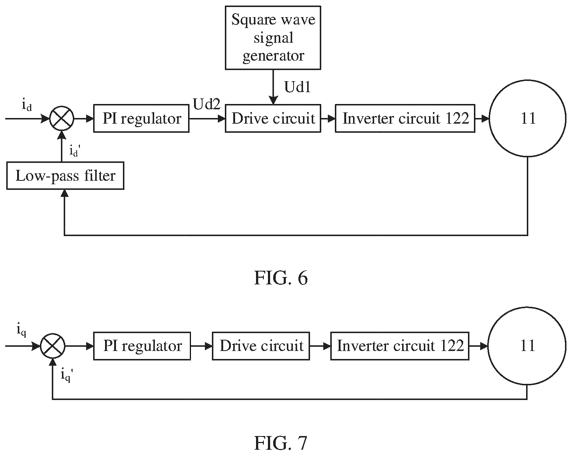

FIG. 6 is a diagram of running of the direct axis current control module 1215. As shown in FIG. 6, id is the direct axis current given signal, id' is the direct axis current feedback value signal, Ud1 is the square-wave voltage given signal, and Ud2 is the square-wave voltage bias signal. It can be learned from FIG. 5 and FIG. 6 that the motor controller 12 provided in this application implements closed-loop control on the direct axis current component, thereby improving robustness and accuracy of control on the direct axis current component.

In addition, as shown in FIG. 5, the control circuit further includes the quadrature axis current control module 1214. The quadrature axis current control module 1214 is configured to: receive a quadrature axis current given value signal, and output a quadrature axis voltage signal. In embodiments of this application, a quadrature axis current indicated by the quadrature axis current given value signal is 0. As described above, a quadrature axis current of the drive motor 11 is used to control torque output by the drive motor. In a high-frequency pulse heating process of the power battery, if the quadrature axis current of the drive motor 11 is not zero, the drive motor 11 outputs unexpected torque. When the unexpected torque of the drive motor 11 is transmitted to the wheels 15, the electric vehicle 10 generates vibration and noise. This affects ride experience of the electric vehicle 10.

If open-loop control is performed on the quadrature axis current of the drive motor 11, it is difficult to precisely control the quadrature axis current of the drive motor 11 to be zero. As a result, the drive motor 11 easily generates the unexpected torque. Therefore, the motor controller 12 provided in embodiments of this application performs closed-loop control on the quadrature axis current of the drive motor 11. Specifically, as shown in FIG. 5, the quadrature axis current control module 1214 receives the quadrature axis current given value signal and the quadrature axis current feedback signal at the same time, and outputs a quadrature axis voltage signal Uq based on a comparison result of the quadrature axis current given value signal and the quadrature axis current feedback signal. The quadrature axis current given value signal is zero, and the quadrature axis current feedback signal corresponds to the quadrature axis current component in the three-phase current output by the inverter circuit. The quadrature axis current control module 1214 provided in embodiments of this application implements closed-loop control on the quadrature axis voltage, so that the quadrature axis current can be precisely controlled to be zero. This improves system accuracy and control robustness, avoids unexpected torque output by the drive motor 11 in the pulse heating process of the power battery, and improves NVH performance and driving comfort of the electric vehicle 10.

FIG. 7 is a diagram of the quadrature axis current control module 1214. As shown in FIG. 5, iq is the quadrature axis current value indicated by the quadrature axis current given value signal, and iq' is the quadrature axis current of the drive motor 11 indicated by the quadrature axis current feedback signal. The control circuit 121 compares a difference between iq and iq'. A PI regulator outputs, based on the difference between iq and iq', an adjustment value to adjust, in time, the quadrature axis voltage signal sent to the drive module. The drive module outputs a PWM control signal based on an adjusted quadrature axis voltage signal, to control the inverter circuit 122 to output the three-phase current. The quadrature axis current component of the three-phase current is a quadrature axis current indicated by the quadrature axis voltage signal.

As shown in FIG. 5, the drive module 1216 includes a Park transformation (Park's Transmission) module, an inverse Park transformation module, and a Clark transformation (Clark's Transmission) module. The Park transformation module is configured to transform two components in an $\alpha\beta$ coordinate system into two components in an orthogonal rotating coordinate system (dq coordinate system), and correspondingly, the Park inverse transformation module is configured to transform two components in the orthogonal rotational coordinate system (dq coordinate system) into two components in the $\alpha\beta$ coordinate system. The Clark transformation module is configured to transform a time domain component in a three-phase system (abc coordinate system) into two components in the $\alpha\beta$ coordinate system.

Specifically, in embodiments of this application, the Park transformation module receives the quadrature axis voltage signal Uq and the direct axis voltage signal Ud, and Park inverse transformation is performed on the signals Uq and Ud in a direct axis-quadrature axis coordinate system to obtain voltage signals U$\alpha$ and U$\beta$ in the $\alpha\beta$ coordinate system. An SVPWM module generates a PWM control signal based on the signals U$\alpha$ and U$\beta$. The PWM control signal is used to control a conduction frequency and a duty cycle of a switching transistor of the inverter circuit.

In addition, a current sensor collects three-phase current signals ia, ib, and ic of the drive motor 11, and the Clark transformation module is configured to transform the current signals ia, ib, and ic in the three-phase coordinate system into current signals i$\alpha$ and i$\beta$ in the $\alpha\beta$ coordinate system. Then, the Park inverse transformation module performs Park inverse transformation on the current signals i$\alpha$ and i$\beta$ in the $\alpha\beta$ coordinate system, to transform the current signals i$\alpha$ and i$\beta$ in the $\alpha\beta$ coordinate system into the current signals id and iq in the direct axis-quadrature axis coordinate system, where iq is output as the quadrature axis current feedback signal, and id is output as the direct axis current feedback value signal after the high-frequency signal component is filtered out by the low-pass filter.

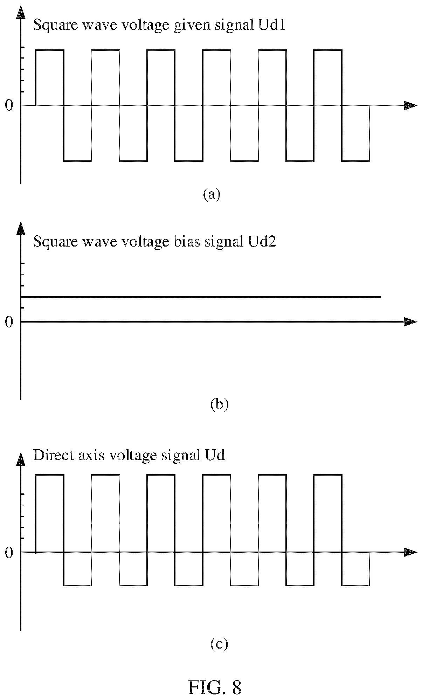

For example, as shown in FIG. 8, (a) in FIG. 8 is a diagram of a waveform indicated by the direct axis voltage given signal Ud1, and the direct axis voltage given signal Ud1 indicates the frequency and the amplitude of the direct axis voltage. (b) in FIG. 8 is a diagram of a waveform of a direct axis bias voltage indicated by the direct axis voltage bias signal Ud2, which indicates a direct current bias value of the direct axis voltage. (c) in FIG. 8 is a diagram of a waveform of the final direct axis voltage signal Ud, that is, the diagram of the waveform of (c) in FIG. 8 is formed by superposition of the voltage signals in (a) in FIG. 8 and (b) in FIG. 8. The drive module 1216 finally drives, based on the direct axis voltage signal Ud, the inverter circuit to output the corresponding three-phase current.

In embodiments of this application, a waveform of a current of each phase of the three-phase current of the inverter circuit is a unipolar triangular wave. The unipolar triangular wave means a triangular wave current in which a direction of a current of each phase of the drive motor remains unchanged. In embodiments of this application, a waveform of a charge/discharge current of the bus capacitor is a sine wave, and a frequency of the bus current is equal to a frequency of a square wave voltage given signal.

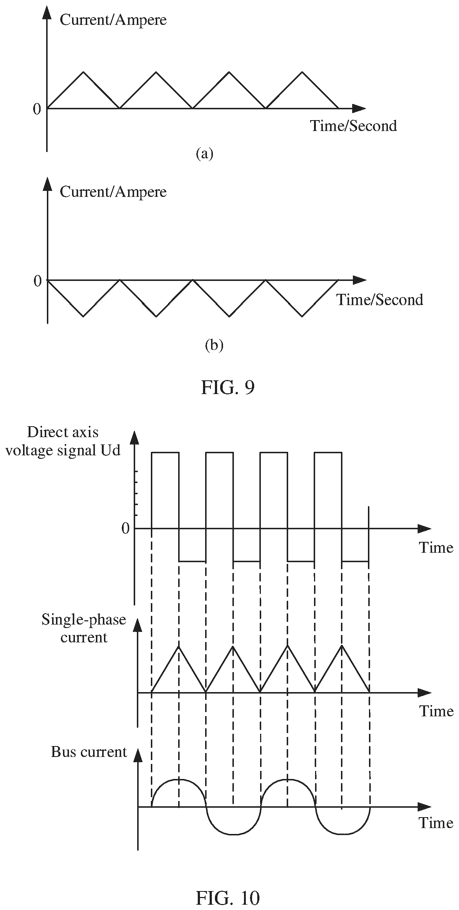

FIG. 9 is a diagram of the unipolar triangular wave. As shown in FIG. 9, a current in (a) in FIG. 9 is always higher than zero, and a current in (b) in FIG. 9 is always less than zero.

FIG. 10 is a diagram of waveforms of the direct axis voltage, a U-phase current in the three-phase current, and the pulse alternating current. In embodiments of this application, a frequency of the direct axis voltage signal Ud, a frequency of the phase current of the drive motor, and a frequency of the pulse alternating current are the same. However, it should be noted that the direct axis voltage signal Ud provided in embodiments of this application is decoupled from a switching frequency of the switching transistor of the motor controller 12 in the pulse heating process. In other words, in the pulse heating process, there is no direct relationship between the switching frequency of the switching transistor of the motor controller 12 and a square wave voltage frequency. For example, the switching frequency of the switching transistor is 8 kHz, and the square wave voltage frequency is 2000 Hz.

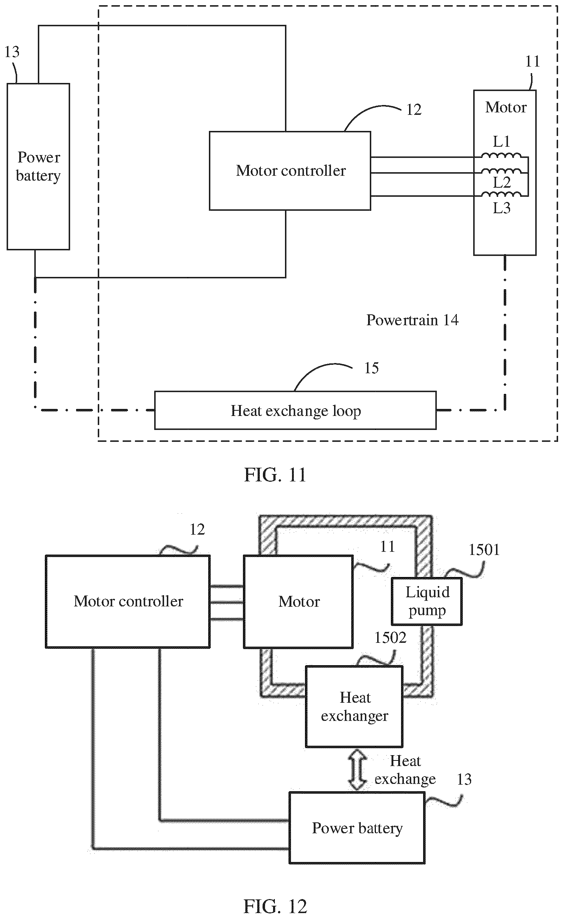

As shown in FIG. 11, the powertrain provided in embodiments of this application includes a heat exchange loop 15. Based on thermal effect of a current, the three-phase current on the drive motor 11 cause a three-phase winding of the drive motor 11 to heat. The powertrain 14 provided in embodiments of this application includes the heat exchange loop 15. The heat exchange loop 15 is configured to conduct heat generated on the three-phase winding of the drive motor 11 to the power battery 13, to heat the power battery 13. According to the powertrain provided in embodiments of this application, a heat exchange loop is disposed to conduct, to the power battery, the heat generated on the winding of the drive motor in the pulse heating process of the power battery, thereby improving energy utilization efficiency, saving energy, and improving efficiency of heating the power battery.

In an embodiment, as shown in FIG. 12, the heat exchange loop 15 includes a heat transfer medium, a heat transfer medium flow loop, a liquid pump 1501, and a heat exchanger 1502. The heat transfer medium is configured to absorb the heat generated on the winding of the drive motor. The heat transfer medium flows in the heat transfer medium flow loop. The liquid pump 1501 is configured to provide power for flow of the heat transfer medium. The heat exchanger 1502 is configured to absorb the heat in the heat transfer medium and conduct the absorbed heat in the heat transfer medium to the power battery 13, to heat the power battery 13.

According to the foregoing embodiments, an embodiment of this application further provides a control method for a motor controller. The control method includes:

in response to a battery heating level instruction, controlling bridge arm midpoints of the three switching transistor bridge arms to output a first three-phase current, where torque generated by the motor driven by the first three-phase current is less than a preset torque value, and the three-phase current is used to generate a first pulse alternating current on the direct current bus; and

in response to another battery heating level instruction, controlling the bridge arm midpoints of the three switching transistor bridge arms to output a second three-phase current, where torque generated by the motor driven by the second three-phase current is less than the preset torque value, and the second three-phase current is used to generate a second pulse alternating current on the direct current bus.

The first pulse alternating current and the second pulse alternating current each have a direct current bias, and at least one of a frequency, an amplitude, or a direct current bias value of the first pulse alternating current is different from that of the second pulse alternating current.

In other words, according to the control method for the motor controller 12 provided in embodiments of this application, the first pulse alternating current output by the inverter circuit may be adjusted based on different battery heating level instructions. When the battery heating level instructions received by the motor controller 12 are different, correspondingly, parameter values of the pulse alternating current output by the inverter circuit 122 are also different. A relationship between the battery heating level instruction and the current parameter is described above. Details are not described herein again.

A person of ordinary skill in the art may understand that various numbers such as "first" and "second" in this application are merely used for differentiation for ease of description and are not used to limit the scope of embodiments of this application or a sequence. Execution sequences of processes should be determined based on functions and internal logic of the processes.

A person of ordinary skill in the art may be aware that, in combination with the examples described in embodiments disclosed in this specification, modules may be implemented by electronic hardware or a combination of computer software and electronic hardware. Whether the functions are performed by hardware or software depends on particular applications and design constraint conditions of the technical solutions. A person skilled in the art may use different methods to implement the described functions for each specific application, but such implementation should not be considered beyond the scope of this application.

**Claims**

1. A motor controller for pulse heating of a power battery, wherein the motor controller comprises an inverter circuit and a bus capacitor, the inverter circuit comprises three switching transistor bridge arms, two ends of each switching transistor bridge arm are respectively configured to connect to two ends of the bus capacitor, the two ends of the bus capacitor are respectively configured to connect to positive and negative electrodes of a power battery through a direct current bus, and bridge arm midpoints of the three switching transistor bridge arms are separately configured to connect to a three-phase winding of a motor;

   the bridge arm midpoints of the three switching transistor bridge arms are configured to output a three-phase current to the three-phase winding, the three-phase current is used to generate a pulse alternating current on the direct current bus, and the pulse alternating current is used to heat the power battery; and
   a waveform of a current of each phase of the three-phase current is a unipolar triangular wave, and a sum of currents of phases of the three-phase current is zero.

2. The motor controller according to claim 1, wherein the motor controller is configured to:

   in response to a battery heating level instruction, output a first three-phase current based on an indication of the battery heating level instruction, wherein the first three-phase current is used to generate a first pulse alternating current; and
   in response to another battery heating level instruction, output a second three-phase current based on an indication of the another battery heating level instruction, wherein the second three-phase current is used to generate a second pulse alternating current, wherein
   at least one of a direct current bias value of the three-phase current, a frequency value of the pulse alternating current, and an amplitude of the pulse alternating current that are indicated by the battery heating level instruction is different from that indicated by the another battery heating level instruction, and the first pulse alternating current and the second pulse alternating current have different heating power.

3. The motor controller according to claim 1 or 2, wherein the motor controller is configured to:

   control a quadrature axis current component of the three-phase current to be zero; or
   control a value of torque generated by the motor driven by the three-phase current to be less than a preset torque value.

4. The motor controller according to claim 1, wherein the motor controller is configured to control a frequency of the three-phase current to be equal to a frequency of the pulse alternating current.

5. The motor controller according to claim 1, wherein the motor controller is configured to control a waveform of the pulse alternating current generated by the three-phase current to be an irregular sine wave.

6. The motor controller according to claim 1, wherein the three-phase current and the pulse alternating current each have a direct current bias.

7. The motor controller according to any one of claims 2 to 6, wherein the motor controller comprises a control circuit, the control circuit comprises a storage apparatus, the storage apparatus is configured to store a plurality of preset parameter groups, and the plurality of preset parameter groups respectively correspond to a plurality of battery heating level instructions, wherein
   each preset parameter group comprises a frequency value of a direct axis voltage, an amplitude of the direct axis voltage, and a direct axis current given value, any two preset signal groups are different in at least one of the frequency value of the direct axis voltage, the amplitude of the direct axis voltage, and the direct axis current given value, and the direct axis voltage is a square wave voltage.

8. The motor controller according to claim 7, wherein the motor controller comprises a condition processing module, and the condition processing module is configured to output a direct axis voltage frequency value signal and a direct axis voltage amplitude signal based on the indication of the battery heating level instruction, wherein the direct axis voltage frequency value signal indicates the frequency value of the direct axis voltage, and the direct axis voltage amplitude signal indicates the amplitude of the direct axis voltage.

9. The motor controller according to claim 8, wherein the control circuit comprises a square wave signal generator, and the square wave signal generator is configured to output a direct axis voltage given signal based on the direct axis voltage frequency value signal and the direct axis voltage amplitude signal, wherein the direct axis voltage given signal indicates the frequency value of the direct axis voltage and the amplitude of the direct axis voltage.

10. The motor controller according to any one of claims 7 to 9, wherein the control circuit comprises a direct axis current control module; and
the direct axis current control module is configured to: receive a direct axis current given value signal and a direct axis current feedback value signal, and output a direct axis voltage bias signal, wherein the direct axis voltage bias signal indicates a bias value of the direct axis voltage, the direct axis current given value signal indicates the direct axis current given value, and the direct axis current given value is a direct current bias.

11. The motor controller according to claim 9, wherein the control circuit comprises a quadrature axis current control module, and the quadrature axis current control module is configured to: receive a quadrature axis current given value signal and a quadrature axis current feedback value signal, and output a quadrature axis voltage signal, wherein a quadrature axis current given value indicated by the quadrature axis current given value signal is zero, the quadrature axis current feedback value signal indicates a quadrature axis current component of the three-phase current, and the quadrature axis voltage signal is used to regulate the quadrature axis current component of the three-phase current.

12. The motor controller according to claim 7, wherein the control circuit comprises a drive module, and the drive module is configured to output a drive signal based on a direct axis voltage signal and a quadrature axis voltage signal, wherein the direct axis voltage signal comprises a direct axis voltage given signal and a direct axis voltage bias signal, and the drive signal is used to control the inverter circuit to output the three-phase current;
wherein the frequency of the pulse alternating current varies with the frequency value of the direct axis voltage.

13. A control method for a motor controller, wherein the motor controller comprises an inverter circuit and a bus capacitor, the inverter circuit comprises three switching transistor bridge arms, two ends of each switching transistor bridge arm are respectively configured to connect to two ends of the bus capacitor, the two ends of the bus capacitor are respectively configured to connect to positive and negative electrodes of a power battery through a direct current bus, and bridge arm midpoints of the three switching transistor bridge arms are separately configured to connect to a three-phase winding of a motor; and the control method comprises:

in response to a battery heating level instruction, controlling the bridge arm midpoints of the three switching transistor bridge arms to output a first three-phase current, wherein a value of torque generated by the motor driven by the first three-phase current is less than a preset torque value, and the three-phase current is used to generate a first pulse alternating current on the direct current bus; and
in response to another battery heating level instruction, controlling the bridge arm midpoints of the three switching transistor bridge arms to output a second three-phase current, wherein torque generated by the motor driven by the second three-phase current is less than the preset torque value, and the second three-phase current is used to generate a second pulse alternating current on the direct current bus, wherein
the first pulse alternating current and the second pulse alternating current each have a direct current bias, and at least one of a frequency, an amplitude, or a direct current bias value of the first pulse alternating current is different from that of the second pulse alternating current.

14. The control method according to claim 13, wherein a current of each phase of the three-phase current is a unipolar triangular wave, and a frequency of the three-phase current is equal to a frequency of the pulse alternating current.

15. A powertrain, wherein the powertrain comprises a motor and a motor controller, the motor controller comprises an inverter circuit and a bus capacitor, the inverter circuit comprises three switching transistor bridge arms, two ends of each switching transistor bridge arm are respectively configured to connect to two ends of the bus capacitor, the two ends of the bus capacitor are respectively configured to connect to positive and negative electrodes of a power battery through a direct current bus, and bridge arm midpoints of the three switching transistor bridge arms are separately configured to connect to a three-phase winding of the motor, wherein

the bridge arm midpoints of the three switching transistor bridge arms are configured to output a three-phase current, the three-phase current is used to generate a pulse alternating current on the direct current bus, and the pulse alternating current is used to heat the power battery; and
a current of each phase of the three-phase current is a unipolar triangular wave, a sum of the three-phase current is zero, and the pulse alternating current has a direct current bias.

Powertrain 14

Motor
controller 12

Power battery
13

Drive motor
11

Wheel 15

Electric vehicle 10

FIG. 1

Powertrain 14

Motor controller
12

Wheel
12

Drive motor
11

Wheel
12

FIG. 2

FIG. 3

FIG. 4a

FIG. 4b

FIG. 5

Square wave
signal
generator

Ud1

$i_d$ → ⊗ → PI regulator — Ud2 → Drive circuit → Inverter circuit 122 → 11

$i_d{}'$

Low-pass filter

FIG. 6

$i_q$ → ⊗ → PI regulator → Drive circuit → Inverter circuit 122 → 11

$i_q{}'$

FIG. 7

Square wave voltage given signal Ud1

0

(a)

Square wave voltage bias signal Ud2

0

(b)

Direct axis voltage signal Ud

0

(c)

FIG. 8

FIG. 9

FIG. 10

FIG. 11

FIG. 12

# EUROPEAN SEARCH REPORT

Europäisches
Patentamt

European
Patent Office

Office européen
des brevets

**Application Number**

EP 24 20 9959

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2023 095217 A (DENSO CORP) 6 July 2023 (2023-07-06) * paragraph [0005] - paragraph [0102]; figures 1,2,3,5,6,8,10 * | 1-15 | INV. B60L15/02 B60L58/27 H01M10/615 |
| X | US 2022/014137 A1 (LEE YONG JAE [KR] ET AL) 13 January 2022 (2022-01-13) | 1-5,7-9, 11 | |
| A | * paragraph [0002] - paragraph [0069]; figures 1,2 * | 6,10, 12-15 | |
| X | CN 115 805 848 A (HUAWEI DIGITAL POWER TECH CO LTD) 17 March 2023 (2023-03-17) | 1-5,7-9, 11 | |
| A | * paragraph [0001] - paragraph [0104]; figures 4,8 * | 6,10, 12-15 | |

**TECHNICAL FIELDS
SEARCHED (IPC)**

B60L
H01M
H02P

The present search report has been drawn up for all claims

| Place of search | Date of completion of the search | Examiner |
|---|---|---|
| The Hague | 27 March 2025 | Cuk, Vladimir |

EPO FORM 1503 03.82 (P04C01)

## ANNEX TO THE EUROPEAN SEARCH REPORT
## ON EUROPEAN PATENT APPLICATION NO.

EP 24 20 9959

This annex lists the patent family members relating to the patent documents cited in  the above-mentioned European search report.
The members are as contained in the European Patent Office EDP file on
The European Patent Office is in no way liable for these particulars which are merely given for the purpose of information.

27-03-2025

| Patent document cited in search report | | Publication date | Patent family member(s) | | Publication date |
|---|---|---|---|---|---|
| JP 2023095217 | A | 06-07-2023 | CN | 118451645 A | 06-08-2024 |
| | | | EP | 4456405 A1 | 30-10-2024 |
| | | | JP | 2023095217 A | 06-07-2023 |
| | | | US | 2024347806 A1 | 17-10-2024 |
| | | | WO | 2023120030 A1 | 29-06-2023 |
| US 2022014137 | A1 | 13-01-2022 | CN | 113921952 A | 11-01-2022 |
| | | | DE | 102020214426 A1 | 13-01-2022 |
| | | | KR | 20220006271 A | 17-01-2022 |
| | | | US | 2022014137 A1 | 13-01-2022 |
| CN 115805848 | A | 17-03-2023 | CN | 115805848 A | 17-03-2023 |
| | | | WO | 2024120468 A1 | 13-06-2024 |

EPO FORM P0459

For more details about this annex : see Official Journal of the European Patent Office, No. 12/82